# EUROPEAN PATENT SPECIFICATION

(11) **EP 3 711 936 B1**
(45) Date of publication and mention of the grant of the patent: **15.09.2021**
(21) Application number: 20159024.7
(22) Date of filing: 24.02.2020
(51) Int. Cl.: B29D 30/06

(54) **METHOD FOR PRODUCING PNEUMATIC TIRE**
VERFAHREN ZUR HERSTELLUNG EINES LUFTREIFENS
PROCÉDÉ DE PRODUCTION DE PNEUMATIQUE

(30) Priority: 22.03.2019 JP 2019054010
(43) Date of publication of application: 23.09.2020
(73) Proprietor: Sumitomo Rubber Industries, Ltd., Kobe-shi, Hyogo-ken 651-0072 (JP)
(72) Inventor: KATOU, Kazuhisa, Kobe-shi, Hyogo-ken, 651-0072 (JP); HANYU, Hiromitsu, Kobe-shi, Hyogo-ken, 651-0072 (JP)
(74) Representative: Manitz Finsterwald Patent- und Rechtsanwaltspartnerschaft mbB

(56) References cited:
- JP-A- 2013 043 436
- JP-A- 2018 086 803
- US-A- 5 238 643

## Description

### BACKGROUND OF THE INVENTION

### Field of the Invention

The present invention relates to a method for producing a pneumatic tire.

### Description of the Background Art

A vulcanizing apparatus is used for producing a pneumatic tire. The vulcanizing apparatus includes a mold and a bladder. A raw cover (unvulcanized tire) is placed in the mold. At this time, the bladder is located inside the raw cover. The bladder is filled with high-temperature steam, so that the bladder expands while being heated. Furthermore, the bladder is filled with a pressurized gas. The raw cover is sandwiched between the cavity face of the mold and the bladder having expanded, and pressurized while being heated. By the heating and the pressurization, a rubber composition of the raw cover flows. By the heating, the rubber composition is caused to undergo a crosslinking reaction, forming a tire.

During vulcanization, a temperature difference may occur depending on a location of a raw cover (here, the temperature difference is referred to as "vulcanization temperature difference"). For example, the temperature of an upper part of the raw cover more easily rises than that of a lower part of the raw cover. The vulcanization temperature difference can affect the rolling resistance of a tire obtained from the raw cover.

In order to reduce the vulcanization temperature difference, steam purge and gas purge may be performed during vulcanization. In the steam purge, after the bladder is filled with high-temperature steam, the gas in the bladder is discharged while filling the bladder with the steam in a short time. Flow of the gas occurs in the bladder, and thus the temperature difference in the bladder is reduced. Accordingly, the vulcanization temperature difference is reduced. In the gas purge, similarly, after the bladder is filled with a pressurized gas, the gas in the bladder is discharged while filling the bladder with the gas in a short time, thereby reducing the vulcanization temperature difference. A study on a vulcanizing apparatus that can perform steam purge and gas purge is reported in JP 2013-043436 A.

US 5,238,643 A discloses a vulcanization method for rubber tires in which a heating steam or gas is supplied into an inner space of a tire. Thence, an unheated pressurizing gas is introduced into the inner space, while the heating steam or gas is discharged. Thus, the heating steam or gas is replaced by the pressurizing gas so as to achieve a cooling effect. In another step, a pressurizing gas is then further supplied while the discharge of the heating gas or steam is stopped. Finally, all gas in the internal space is exhausted down to zero pressure.

Hitherto, in steam purge and gas purge (collectively referred to as purge), a time for which gas is discharged from the interior of the bladder is set to a preset value. In this method, the vulcanization temperature difference may vary depending on a raw cover. A production method that can suppress the variation and stably reduce the vulcanization temperature difference is desired.

### SUMMARY OF THE INVENTION

An object of the present invention is to provide a method for producing a pneumatic tire, in which variation in a vulcanization temperature difference depending on a raw cover is suppressed and the vulcanization temperature difference is stably reduced.

A method for producing a pneumatic tire according to the present invention is defined in claim 1 and includes the steps of:
(A) setting a raw cover in a mold;
(B) supplying steam into a bladder located inside the raw cover, such that an internal pressure of the bladder becomes a predetermined pressure P1;
(C) discharging gas in the bladder;
(D) stopping the discharge of the gas when the internal pressure of the bladder decreases to a predetermined pressure P2;
(E) increasing the internal pressure of the bladder by supplying the steam into the bladder;
(F) supplying a pressurized gas into the bladder such that the internal pressure of the bladder becomes a predetermined pressure P3;
(G) discharging the gas in the bladder;
(H) stopping the discharge of the gas when the internal pressure of the bladder decreases to a predetermined pressure P4; and
(I) increasing the internal pressure of the bladder by supplying the pressurized gas into the bladder.

Preferably, the supply of the steam into the bladder is stopped in the step (C).

Preferably, the supply of the pressurized gas into the bladder is stopped in the step (G).

Preferably, in the step (C), the gas in the bladder is discharged through a pipe through which a liquefied material of the steam is discharged.

Preferably, in the step (G), the gas in the bladder is discharged through a pipe through which the pressurized gas is collected.

A production apparatus for a pneumatic tire according to the present invention is defined in claim 6 and includes: a mold; a bladder located in the mold; a first supply pipe through which steam is supplied into the bladder; a first supply valve for opening and closing the first supply pipe; a second supply pipe through which a pressurized gas is supplied into the bladder; a second supply valve for opening and closing the second supply pipe; a first discharge pipe and a second discharge pipe through which gas in the bladder can be discharged; a first discharge valve mounted on the first discharge pipe; a second discharge valve mounted on the second discharge pipe; a pressure gauge configured to measure an internal pressure of the bladder; and a controller capable of controlling opening and closing of the first discharge valve and the second discharge valve on the basis of a measurement result of the pressure gauge and capable of opening and closing the first supply valve and the second supply valve, the controller being configured to open the first supply valve to supply steam into the bladder such that an internal pressure of the bladder becomes a predetermined pressure, open the first discharge valve to discharge gas in the bladder, close the first discharge valve to stop the discharge of the gas when the internal pressure of the bladder decreases to a predetermined pressure, open the first supply valve to supply the steam into the bladder, thereby increasing the internal pressure of the bladder, open the second supply valve to supply a pressurized gas into the bladder such that the internal pressure of the bladder becomes a predetermined pressure, open the second discharge valve to discharge the gas in the bladder, close the second discharge valve to stop the discharge of the gas when the internal pressure of the bladder decreases to a predetermined pressure, and open the second supply valve to supply the pressurized gas into the bladder, thereby increasing the internal pressure of the bladder.

The apparatus further includes a pipe through which a liquefied material of the steam is discharged, and one pipe is preferably used as both the pipe and the first discharge pipe.

The apparatus further includes a pipe through which the pressurized gas is collected, and one pipe is preferably used as both the pipe and the second discharge pipe.

As a result of a study conducted by the inventors, the inventors have found that, even when a time for which gas is discharged from the interior of a bladder is set to a predetermined value, the degree of decrease in the internal pressure of the bladder during purge varies depending on a raw cover. The inventors have also found that making a decrease in this pressure during purge constant is effective for suppressing variation in a vulcanization temperature difference depending on a raw cover.

In the method for producing a pneumatic tire according to the present invention, steam purge is performed by the steps (C) and (D), and gas purge is performed by the steps (G) and (H). In these purges, when the internal pressure of the bladder decreases to the predetermined pressure by discharge of the gas from the interior of the bladder, the discharge of the gas is stopped. In this production method, a decrease in the internal pressure of the bladder during the purge is made constant. In this method, variation in a vulcanization temperature difference depending on a raw cover is suppressed. In this production method, the vulcanization temperature difference can be stably reduced.

### BRIEF DESCRIPTION OF THE DRAWINGS

FIG. 1 is a schematic diagram showing a production apparatus used in a production method according to an embodiment of the present invention; and
FIG. 2 is a graph representing transition of the internal pressure of a bladder during vulcanization by the production method.

### DESCRIPTION OF THE PREFERRED EMBODIMENTS

Hereinafter, the present invention will be described in detail based on preferred embodiments with appropriate reference to the drawings.

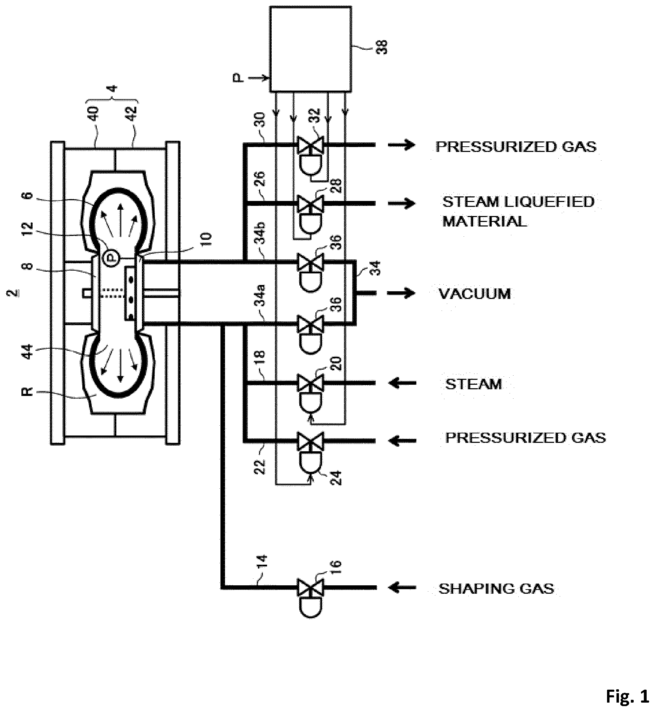

FIG. 1 is a schematic diagram showing a production apparatus 2 used in a method for producing a tire according to an embodiment of the present invention. The apparatus 2 is used for vulcanizing a raw cover. The apparatus 2 includes a mold 4, a bladder 6, an upper ring 8, a lower ring 10, a pressure gauge 12, a shaping pipe 14, a shaping valve 16, a first supply pipe 18, a first supply valve 20, a second supply pipe 22, a second supply valve 24, a first discharge pipe 26, a first discharge valve 28, a second discharge pipe 30, a second discharge valve 32, a vacuum pipe 34, vacuum valves 36, and a controller 38. In this drawing, a raw cover R vulcanized by the apparatus 2 is also shown. For the mold 4, the bladder 6, the upper ring 8, the lower ring 10, and the raw cover R, cross-sections thereof are shown.

The mold 4 has a ring shape. The mold 4 includes an upper mold 40 and a lower mold 42 each having a ring shape. The upper mold 40 and the lower mold 42 are stacked on each other in the up-down direction. The mold 4 has a cavity in which the raw cover R is placed. The inner surface of the upper mold 40 and the inner surface of the lower mold 42 form a cavity face that is brought into contact with the raw cover R.

The bladder 6 is located inside the cavity of the mold 4. When the raw cover R is placed in the mold 4, the bladder 6 is located inside the raw cover R. The bladder 6 expands by filling the bladder 6 with a gas. The bladder 6 having expanded has an annular shape with an open inner peripheral surface. The bladder 6 contracts by discharging the gas in the bladder 6.

The upper ring 8 has a disc shape. The upper ring 8 is fitted to the upper end side of the inner peripheral surface of the bladder 6. The lower ring 10 has a disc shape. The lower ring 10 is fitted to the lower end side of the inner peripheral surface of the bladder 6. The bladder 6, the upper ring 8, and the lower ring 10 form a closed space (referred to as a bladder internal space 44).

The pressure gauge 12 is mounted on the lower ring 10. The pressure gauge 12 is located in the bladder internal space 44. The pressure gauge 12 measures the internal pressure of the bladder internal space 44 (that is, the internal pressure of the bladder 6).

A gas for shaping the bladder 6 is passed through the shaping pipe 14. The gas for shaping is supplied through the shaping pipe 14 into the bladder 6. A typical gas for shaping is air. The shaping valve 16 is mounted on the shaping pipe 14. The shaping pipe 14 is opened and closed by opening and closing the shaping valve 16.

The first supply pipe 18 is connected to the bladder internal space 44. High-temperature steam is passed through the first supply pipe 18. The steam is supplied through the first supply pipe 18 to the bladder internal space 44. Typically, water vapor is passed through the first supply pipe 18. The first supply valve 20 is mounted on the first supply pipe 18. The first supply pipe 18 is opened and closed by opening and closing the first supply valve 20.

The second supply pipe 22 is connected to the bladder internal space 44. A pressurized gas is passed through the second supply pipe 22. The pressurized gas is supplied through the second supply pipe 22 to the bladder internal space 44. By supplying the pressurized gas to the bladder internal space 44, the internal pressure of the bladder 6 can be made higher than by supplying only the steam to the bladder internal space 44. A typical pressurized gas is nitrogen gas (N₂). The second supply valve 24 is mounted on the second supply pipe 22. The second supply pipe 22 is opened and closed by opening and closing the second supply valve 24.

The first discharge pipe 26 is connected to the bladder internal space 44. The gas in the bladder internal space 44 is passed through the first discharge pipe 26. The gas in the bladder internal space 44 is discharged through the first discharge pipe 26. The steam supplied into the bladder 6 liquefies when the heat of the steam is removed. The steam liquefied material (also referred to as drain) is also discharged through the first discharge pipe 26. That is, in this embodiment, the first discharge pipe 26 also serves as a steam liquefied material discharge pipe (referred to as bladder exhaust). The first discharge valve 28 is mounted on the first discharge pipe 26. The first discharge pipe 26 is opened and closed by opening and closing the first discharge valve 28.

The second discharge pipe 30 is connected to the bladder internal space 44. The gas in the bladder internal space 44 is passed through the second discharge pipe 30. The gas in the bladder internal space 44 is discharged through the second discharge pipe 30. The second discharge pipe 30 is also used for collecting the pressurized gas. The pressurized gas in the bladder internal space 44 is collected through the second discharge pipe 30. That is, in this embodiment, the second discharge pipe 30 also serves as a pipe for collecting the pressurized gas (gas collection pipe). The second discharge valve 32 is mounted on the second discharge pipe 30. The second discharge pipe 30 is opened and closed by opening and closing the second discharge valve 32.

The vacuum pipe 34 is connected to the bladder internal space 44. The gas in the bladder 6 is discharged to the outside by sucking the gas in the bladder 6 through the vacuum pipe 34. As shown in FIG. 1, in this embodiment, the vacuum pipe 34 branches in the middle into a first portion 34a and a second portion 34b. The vacuum valves 36 are mounted on the first portion 34a and the second portion 34b, respectively. The vacuum pipe 34 is opened and closed by opening and closing each vacuum valve 36.

As shown in FIG. 1, in this embodiment, the first supply pipe 18, the second supply pipe 22, the shaping pipe 14, and the first portion 34a of the vacuum pipe 34 are connected in the middle. The first supply pipe 18, the second supply pipe 22, the shaping pipe 14, and the first portion 34a have a shared portion. These pipes do not have to have a shared portion. The first supply pipe 18, the second supply pipe 22, the shaping pipe 14, and the first portion 34a may each be connected to the bladder internal space 44 without having a portion shared by any other pipe.

As shown in FIG. 1, in this embodiment, the first discharge pipe 26, the second discharge pipe 30, and the second portion 34b of the vacuum pipe 34 are connected in the middle. The first discharge pipe 26, the second discharge pipe 30, and the second portion 34b have a shared portion. The first discharge pipe 26, the second discharge pipe 30, and the second portion 34b do not have to have a shared portion. The first discharge pipe 26, the second discharge pipe 30, and the second portion 34b may each be connected to the bladder internal space 44 without having a portion shared by any other pipe.

The internal pressure of the bladder 6 measured by the pressure gauge 12 is sent to the controller 38. The controller 38 sends a control signal to each of the first discharge valve 28 and the second discharge valve 32. The controller 38 can control opening and closing of the first discharge valve 28 and the second discharge valve 32 on the basis of the measurement result of the internal pressure of the bladder 6. Furthermore, in this embodiment, the controller 38 can control opening and closing of the first supply valve 20 and the second supply valve 24.

A method for producing a tire according to the present invention includes a step of forming a raw cover and a step of vulcanizing the raw cover. In the step of forming the raw cover, components such as a carcass, a belt, and a tread are stacked around a drum to obtain the raw cover R. In the step of vulcanizing the raw cover, the raw cover R is heated and pressurized in the mold 4. A rubber composition of the raw cover R is caused to undergo a crosslinking reaction to obtain a tire.

In the step of vulcanizing the raw cover, the apparatus 2 in FIG. 1 is used. This step includes:
(1) a step of setting the raw cover in a mold;
(2) a first vulcanization step of heating and pressurizing the raw cover;
(3) a second vulcanization step of further heating and pressurizing the raw cover; and
(4) a step of removing a tire from the mold.

In the step (1), in a state where the upper mold 40 is detached from the lower mold 42, the raw cover R is set in the lower mold 42. In this state, all the valves of the apparatus 2 in FIG. 1 are closed. The shaping valve 16 is opened, and a gas is supplied through the shaping pipe 14 into the bladder 6. Accordingly, the shape of the raw cover R is adjusted. The shaping valve 16 is closed, and the supply of the gas is stopped. The upper mold 40 is overlaid on the lower mold 42, and the mold 4 is closed. The raw cover R is housed in the cavity in the mold 4.

In the step (2), the raw cover R is heated and pressurized in the mold 4. This step further includes:
(2-1) a step of supplying steam into the bladder 6 such that the internal pressure of the bladder 6 becomes a predetermined pressure P1;
(2-2) a step of discharging the gas in the bladder 6;
(2-3) a step of stopping the discharge of the gas when the internal pressure of the bladder 6 decreases to a predetermined pressure P2; and
(2-4) a step of increasing the internal pressure of the bladder 6 by supplying the steam into the bladder 6.

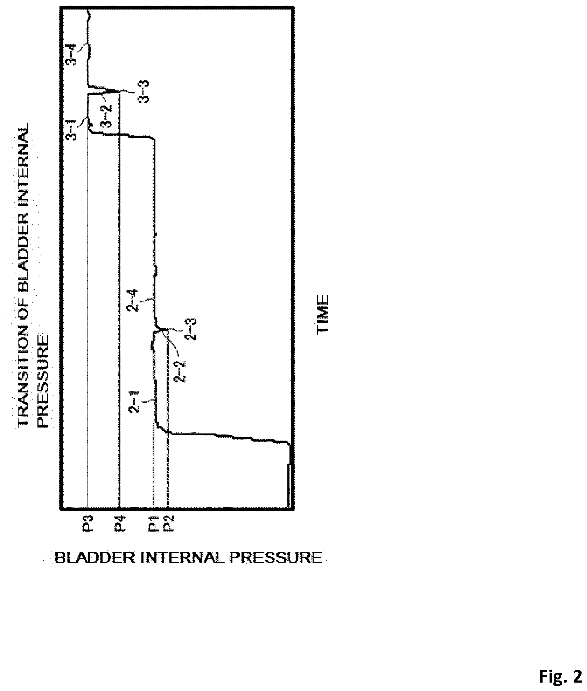

FIG. 2 shows an example of transition of the internal pressure of the bladder 6 over time in this step.

In the step (2-1), the first supply valve 20 is opened, and high-temperature steam is supplied through the first supply pipe 18 to the bladder internal space 44. The temperature of the steam is, for example, about 190°C. By this supply, the internal pressure of the bladder 6 is increased to the predetermined pressure P1. The internal pressure of the bladder 6 is increased to, for example, about 1500 kPa. The steam is continuously supplied such that the internal pressure of the bladder 6 is maintained at the pressure P1. Reference character 2-1 in FIG. 2 indicates transition of the internal pressure of the bladder 6 in this step. By the supply of the steam, the raw cover R is heated and pressurized.

In the step (2-2), the controller 38 closes the first supply valve 20, thereby stopping the supply of the steam. In addition, the controller 38 opens the first discharge valve 28. The gas in the bladder internal space 44 is discharged through the first discharge pipe 26 to the outside. In other words, the gas in the bladder internal space 44 is discharged through the bladder exhaust to the outside. Accordingly, the internal pressure of the bladder 6 decreases. At this time, the steam liquefied material in the bladder internal space 44 is also discharged. Reference character 2-2 in FIG. 2 indicates transition of the internal pressure of the bladder 6 in this step.

In the step (2-3), when the internal pressure of the bladder 6 reaches the predetermined pressure P2, the controller 38 closes the first discharge valve 28. Accordingly, the discharge of the gas in the bladder internal space 44 is stopped. A valve that can be opened and closed at high speed is used as the first discharge valve 28 such that the discharge of the gas is stopped as soon as the internal pressure of the bladder 6 reaches a predetermined pressure. Reference character 2-3 in FIG. 2 indicates the internal pressure of the bladder 6 in this step.

In the step (2-4), the controller 38 opens the first supply valve 20, whereby the steam is supplied to the bladder internal space 44 again. Accordingly, the internal pressure of the bladder 6 is increased. In this embodiment, the internal pressure is returned to the pressure P1. The steam is continuously supplied such that the internal pressure of the bladder 6 is maintained at the pressure P1. Reference character 2-4 in FIG. 2 indicates transition of the internal pressure of the bladder 6 in this step. When a predetermined time has elapsed, the supply of the steam is stopped by closing the first supply valve 20.

The processing performed in the step (2-2) and the step (2-3) is collectively referred to as "steam purge". In the step (2), steam purge is performed. The pressure P1 in the step (2-1) is referred to simply as "pressure in the first vulcanization step". The pressure P2 in the step (2-3) is referred to as "steam purge pressure".

In the step (3), the raw cover R is further heated and pressurized in the mold 4. This step further includes:
(3-1) a step of supplying a pressurized gas into the bladder 6 such that the internal pressure of the bladder 6 becomes a predetermined pressure P3;
(3-2) a step of discharging the gas in the bladder 6;
(3-3) a step of stopping the discharge of the gas when the internal pressure of the bladder 6 decreases to a predetermined pressure P4; and
(3-4) a step of increasing the internal pressure of the bladder 6 by supplying the pressurized gas into the bladder 6.
FIG. 2 shows an example of transition of the internal pressure of the bladder 6 over time in this step.

In the step (3-1), the second supply valve 24 is opened, a pressurized gas is supplied through the second supply pipe 22 to the bladder internal space 44. By this supply, the internal pressure of the bladder 6 is increased to the predetermined pressure P3. The internal pressure of the bladder 6 is increased to, for example, about 2100 kPa. The pressurized gas is continuously supplied such that the internal pressure of the bladder 6 is maintained at the pressure P3. Reference character 3-1 in FIG. 2 indicates transition of the internal pressure of the bladder 6 in this step. By the supply of the pressurized gas, the raw cover R is further pressurized in a state of being heated.

In the step (3-2), the controller 38 closes the second supply valve 24, thereby stopping the supply of the pressurized gas. In addition, the controller 38 opens the second discharge valve 32. The gas in the bladder internal space 44 is discharged through the second discharge pipe 30 to the outside. In other words, the gas in the bladder internal space 44 is discharged through the gas collection pipe to the outside. Accordingly, the internal pressure of the bladder 6 decreases. Reference character 3-2 in FIG. 2 indicates transition of the internal pressure of the bladder 6 in this step.

In the step (3-3), when the internal pressure of the bladder 6 reaches the predetermined pressure P4, the controller 38 closes the second discharge valve 32. Accordingly, the discharge of the gas in the bladder internal space 44 is stopped. A valve that can be opened and closed at high speed is used as the second discharge valve 32 such that the discharge of the gas is stopped as soon as the internal pressure of the bladder 6 reaches a predetermined pressure. Reference character 3-3 in FIG. 2 indicates the internal pressure of the bladder 6 in this step.

In the step (3-4), the controller 38 opens the second supply valve 24, whereby the pressurized gas is supplied to the bladder internal space 44 again. Accordingly, the internal pressure of the bladder 6 is increased. In this embodiment, the internal pressure is returned to the pressure P3. The pressurized gas is continuously supplied such that the internal pressure of the bladder 6 is maintained at the pressure P3. Reference character 3-4 in FIG. 2 indicates transition of the internal pressure of the bladder 6 in this step. When a predetermined time has elapsed, the supply of the pressurized gas is stopped by closing the second supply valve 24.

The processing performed in the step (3-2) and the step (3-3) is collectively referred to as "gas purge". In the step (3), gas purge is performed. The pressure P3 in the step (3-1) is referred to as "pressure in the second vulcanization step". The pressure P4 in the step (3-3) is referred to as "gas purge pressure".

As shown in FIG. 2, the pressure P3 is higher than the pressure P1. The pressure P3 in the second vulcanization step is higher than the pressure P1 in the first vulcanization step. Furthermore, normally, the difference (P3-P4) between the pressure P3 in the second vulcanization step and the gas purge pressure P4 is larger than the difference (P1-P2) between the pressure P1 in the first vulcanization step and the steam purge pressure P2.

In the step (4), by opening the second discharge valve 32, the pressurized gas is collected from the bladder internal space 44 through the gas collection pipe which is also used as the second discharge pipe 30. Furthermore, by closing the second discharge valve 32 and opening the first discharge valve 28, the steam liquefied material is discharged from the bladder internal space 44 through the bladder exhaust which is also used as the first discharge pipe 26. By closing the first discharge valve 28 and opening the vacuum valves 36, the gas in the bladder internal space 44 is sucked and discharged through the vacuum pipe 34. Accordingly, the bladder 6 contracts. The mold 4 is opened, and a tire obtained by vulcanization of the raw cover R is removed therefrom.

In the above embodiment, both steam purge and gas purge are performed. In another embodiment, only either one of steam purge and gas purge may be performed. For example, when steam purge is not performed, the steps (2-2) to (2-4) are not performed. Until a predetermined time elapses, the step (2-1) is continued. For example, when gas purge is not performed, the steps (3-2) to (3-4) are not performed. Until a predetermined time elapses, the step (3-1) is continued.

In the above embodiment, the first discharge pipe 26 also serves as the bladder exhaust. One pipe does not have to be used as both the first discharge pipe 26 and the bladder exhaust. The apparatus 2 may include the first discharge pipe 26 and the bladder exhaust as separate pipes. In this case, a valve is mounted on each of the first discharge pipe 26 and the bladder exhaust.

In the above embodiment, the second discharge pipe 30 also serves as the gas collection pipe. One pipe does not have to be used as both the second discharge pipe 30 and the gas collection pipe. The apparatus 2 may include the second discharge pipe 30 and the gas collection pipe as separate pipes. In this case, a valve is mounted on each of the second discharge pipe 30 and the gas collection pipe.

Hereinafter, advantageous effects of the present invention will be described.

In the method for producing a pneumatic tire according to the present invention, processing of steam purge is performed. After the steam is supplied to the bladder internal space 44 until reaching a predetermined pressure, the gas is discharged from the bladder internal space 44. Accordingly, the gas in the bladder internal space 44 flows. This flow makes the temperature of the gas in the bladder 6 uniform. In this production method, a temperature difference (here, referred to as vulcanization temperature difference) depending on a location of the raw cover R is reduced. Furthermore, in this steam purge, the steam liquefied material can be discharged. This discharge contributes to prevention of undercure of the raw cover R due to the steam liquefied material.

In the steam purge in the production method, when the internal pressure of the bladder 6 decreases to a predetermined pressure by the discharge of the gas from the interior of the bladder 6, the discharge of the gas is stopped. In this production method, a decrease in the internal pressure of the bladder 6 during the steam purge is made constant. In this method, variation in the vulcanization temperature difference depending on the raw cover R is suppressed. In this production method, the vulcanization temperature difference can be stably reduced. A tire produced by this production method has stably reduced rolling resistance.

In this production method, the first discharge valve 28 which can be opened and closed at high speed is used, and further, the controller 38 controls the first discharge valve 28 on the basis of the measurement result of the pressure gauge 12. Accordingly, the discharge of the gas in the bladder 6 can be stopped as soon as the internal pressure of the bladder 6 reaches the predetermined pressure. Accordingly, the degree of decrease in the internal pressure of the bladder 6 during the steam purge can be accurately controlled. In this method, variation in the vulcanization temperature difference depending on the raw cover R is accurately suppressed. In this production method, the vulcanization temperature difference can be stably reduced. A tire produced by this production method has stably reduced rolling resistance.

From the viewpoint of accurately controlling the degree of decrease in the internal pressure of the bladder 6, a valve that takes less than 1 second to close after a control signal is given thereto is preferably used as the first discharge valve 28.

In this production method, the gas is discharged in the step (2-2), and the amount of the discharged gas is made up for by the steam in the step (2-4). By being made up for by the high-temperature steam, the temperature of the gas in the bladder internal space 44 rises. This temperature rise contributes to shortening the vulcanization time. In this production method, the productivity is improved.

In this production method, processing of gas purge is performed. After the pressurized gas is supplied to the bladder internal space 44 until reaching a predetermined pressure, the gas is discharged from the bladder internal space 44. Accordingly, the gas in the bladder internal space 44 flows. This flow makes the temperature of the gas in the bladder 6 uniform. In this production method, the vulcanization temperature difference is reduced.

In the gas purge in this production method, when the internal pressure of the bladder 6 decreases to a predetermined pressure by the discharge of the gas from the interior of the bladder 6, the discharge of the gas is stopped. In this production method, a decrease in the internal pressure of the bladder 6 during the gas purge is made constant. In this method, variation in the vulcanization temperature difference depending on the raw cover R is suppressed. In this production method, the vulcanization temperature difference can be stably reduced.

In this production method, the second discharge valve 32 which can be opened and closed at high speed is used, and further, the controller 38 controls the second discharge valve 32 on the basis of the measurement result of the pressure gauge 12. Accordingly, the discharge of the gas in the bladder 6 can be stopped as soon as the internal pressure of the bladder 6 reaches the predetermined pressure. Therefore, the degree of decrease in the internal pressure of the bladder 6 during the gas purge can be accurately controlled. In this method, variation in the vulcanization temperature difference depending on the raw cover R is accurately suppressed. In this production method, the vulcanization temperature difference can be stably reduced. A tire produced by this production method has stably reduced rolling resistance.

From the viewpoint of accurately controlling the degree of decrease in the internal pressure of the bladder 6, a valve that takes less than 1 second to close after a control signal is given thereto is preferably used as the second discharge valve 32.

In the step (2-2), the supply of the steam to the bladder internal space 44 is preferably stopped. By stopping the supply of the steam to the bladder internal space 44 when discharging the gas in the bladder internal space 44, occurrence of airflow from a steam supply port to a gas discharge port is inhibited. This inhibition prevents a rapid decrease in the internal pressure of the bladder 6 due to an excessive flow rate of the gas being discharged. This prevention contributes to suppression of variation in the degree of decrease in the internal pressure of the bladder 6 during the steam purge. In this method, variation in the vulcanization temperature difference depending on the raw cover R is suppressed. In this production method, the vulcanization temperature difference can be stably reduced.

In the step (3-2), the supply of the pressurized gas to the bladder internal space 44 is preferably stopped. By stopping the supply of the pressurized gas to the bladder internal space 44 when discharging the gas in the bladder internal space 44, occurrence of airflow from a pressurized gas supply port to the gas discharge port is inhibited. This inhibition prevents a rapid decrease in the internal pressure of the bladder 6 due to an excessive flow rate of the gas being discharged. This prevention contributes to suppression of variation in the degree of decrease in the internal pressure of the bladder 6 during the gas purge. In this method, variation in the vulcanization temperature difference depending on the raw cover R is suppressed. In this production method, the vulcanization temperature difference can be stably reduced.

In order to inhibit an excessive decrease in the internal pressure due to a rapid decrease in the internal pressure, a conventional discharge pipe used exclusively for steam purge is provided with a means for limiting the flow rate of gas discharged such as an orifice. Meanwhile, in order to inhibit a decrease in the efficiency of discharge of the steam liquefied material, a normal bladder exhaust is not provided with such a means for limiting a flow rate. Thus, one pipe cannot be used as both the discharge pipe for steam purge and the bladder exhaust.

As described above, in this method, as soon as the internal pressure of the bladder 6 reaches the predetermined pressure, the discharge of the gas in the bladder 6 can be stopped by closing the first discharge valve 28. Accordingly, an excessive decrease in the internal pressure is prevented without providing the first discharge pipe 26 with a means for limiting the flow rate of gas. This makes it possible to use one pipe as both the bladder exhaust and the first discharge pipe 26. By using one pipe as both the bladder exhaust and the first discharge pipe 26, it is made unnecessary to newly install a pipe for steam purge. In this production method, an increase in the cost of the production apparatus 2 is inhibited.

In order to inhibit an excessive decrease in the internal pressure due to a rapid decrease in the internal pressure, a conventional discharge pipe used exclusively for gas purge is provided with a means for limiting the flow rate of gas discharged such as an orifice. Meanwhile, in order to inhibit a decrease in the efficiency of collection of the pressurized gas, a normal gas collection pipe is not provided with such a means for limiting a flow rate. Thus, one pipe cannot be used as both the discharge pipe for gas purge and the gas collection pipe.

As described above, in this method, as soon as the internal pressure of the bladder 6 reaches the predetermined pressure, the discharge of the gas in the bladder 6 can be stopped by closing the second discharge valve 32. Accordingly, an excessive decrease in the internal pressure is prevented without providing the second discharge pipe 30 with a means for limiting the flow rate of gas. This makes it possible to use one pipe as both the gas collection pipe and the second discharge pipe 30. By using one pipe as both the gas collection pipe and the second discharge pipe 30, it is made unnecessary to newly install a pipe for gas purge. In this production method, an increase in the cost of the production apparatus 2 is inhibited.

### EXAMPLES

Hereinafter, effects of the present invention are shown by means of examples, but the present invention should not be construed in a limited manner based on the description of these examples.

### [Example 1]

A raw cover was vulcanized by performing the steps (1) to (4). The raw cover is for a tire with 155/64R14 EC204. The specifications of the production method are shown in the cells for Example 1 in Table 1. This method includes processing of steam purge and gas purge, and thus "Presence" is described in the cell of "Presence/absence of purge" in Table 1. In the purge of the method, when the internal pressure of the bladder decreases to a predetermined pressure, discharge of gas is stopped, and thus "Internal pressure" is described in the cell of "Purge control method" in Table 1. The pressure P1 was set to 1450 kPa, the pressure P2 was set to 1300 kPa, the pressure P3 was set to 2100 kPa, and the pressure P4 was set to 1800 kPa.

### [Comparative Example 1]

In vulcanization of a raw cover of Comparative Example 1, steam purge and gas purge were not performed. This is indicated as "Absence" in the cell of "Presence/absence of purge" in Table 1. Steam was supplied such that the internal pressure of the bladder was constant at the pressure P1, and a pressurized gas was supplied such that the internal pressure of the bladder was constant at the pressure P3. The raw cover was vulcanized in the same manner as Example 1 for the other conditions.

### [Comparative Example 2]

In vulcanization of a raw cover of Comparative Example 2, steam purge and gas purge were performed. In each purge, after discharge of gas from the internal area of the bladder was continued for a predetermined time, the discharge of the gas was stopped. This is indicated as "Time" in the cell of "Purge control method" in Table 1. The raw cover was vulcanized in the same manner as Example 1 for the other conditions.

### [Temperature Difference and Standard Deviation]

In each of the example and the comparative examples, five raw covers were vulcanized. For each raw cover, the maximum temperature on the inner surface of a side portion at the upper side where the temperature is likely to rise and the maximum temperature on the inner surface of a side portion at the lower side where the temperature is less likely to rise were measured, and the temperature difference between these temperatures was calculated. For each of the example and the comparative examples, the average of the temperature differences is shown in Table 1. Furthermore, the standard deviation of the temperature differences is shown in Table 1 as an index with the result of Comparative Example 1 being regarded as 100. The smaller the temperature difference is, the more the vulcanization temperature difference is reduced. The smaller the standard deviation is, the more the variation in the vulcanization temperature difference depending on the raw cover is suppressed. The temperature difference and the standard deviation are preferably smaller.

### [Vulcanization Time]

The temperature, during vulcanization, at the inner side of a belt in a shoulder portion at the lower side where vulcanization is not easily performed was measured. From the result, a time required for appropriate vulcanization was calculated. The result is shown in Table 1 as an index with the result of Comparative Example 1 being regarded as 100. The value is preferably lower.

### [Table 1]

**Table 1 Evaluation Results**

| | Comparative Example 1 | Comparative Example 2 | Example 1 |
|---|---|---|---|
| Presence/absence of purge | Absence | Presence | Presence |
| Purge control method | - | Time | Internal pressure |
| Temperature difference [°C] | 8.7 | 6.9 | 6.4 |
| Standard deviation | 100 | 62 | 35 |
| Vulcanization time | 100 | 97 | 95 |

As shown in Table 1, the results of the example are excellent as a whole. From the evaluation results, advantages of the present invention are clear.

The production method described above can be applied to various tires.

## Claims

1. A method for producing a pneumatic tire, the method comprising the steps of:
(A) setting a raw cover (R) in a mold (4);
(B) supplying steam into a bladder (6) located inside the raw cover (R), such that an internal pressure of the bladder (6) becomes a predetermined pressure (P1);
(C) discharging gas in the bladder (6);
(D) stopping the discharge of the gas when the internal pressure of the bladder (6) decreases to a predetermined pressure (P2);
(E) increasing the internal pressure of the bladder (6) by supplying the steam into the bladder (6);
(F) supplying a pressurized gas into the bladder (6) such that the internal pressure of the bladder (6) becomes a predetermined pressure (P3);
(G) discharging the gas in the bladder (6);
(H) stopping the discharge of the gas when the internal pressure of the bladder (6) decreases to a predetermined pressure (P4); and
(I) increasing the internal pressure of the bladder (6) by supplying the pressurized gas into the bladder (6).

2. The method according to claim 1, wherein the supply of the steam into the bladder (6) is stopped in the step (C).

3. The method according to claim 1 or 2, wherein the supply of the pressurized gas into the bladder (6) is stopped in the step (G).

4. The method according to any one of claims 1 to 3, wherein, in the step (C), the gas in the bladder (6) is discharged through a pipe through which a liquefied material of the steam is discharged.

5. The method according to any one of claims 1 to 4, wherein, in the step (G), the gas in the bladder (6) is discharged through a pipe through which the pressurized gas is collected.

6. A production apparatus (2) for a pneumatic tire, comprising:
a mold (4);
a bladder (6) located in the mold (4);
a first supply pipe (18) through which steam is supplied into the bladder (6);
a first supply valve (20) for opening and closing the first supply pipe (18);
a second supply pipe (22) through which a pressurized gas is supplied into the bladder (6);
a second supply valve (24) for opening and closing the second supply pipe (22);
a first discharge pipe (26) and a second discharge pipe (30) through which gas in the bladder (6) can be discharged;
a first discharge valve (28) mounted on the first discharge pipe (26);
a second discharge valve (32) mounted on the second discharge pipe (30);
a pressure gauge (12) configured to measure an internal pressure of the bladder (6); and
a controller (38) capable of controlling opening and closing of the first discharge valve (28) and the second discharge valve (32) on the basis of a measurement result of the pressure gauge (12) and capable of opening and closing the first supply valve (20) and the second supply valve (24),
**characterized in that** the controller (38) is configured to
open the first supply valve (20) to supply steam into the bladder (6) such that an internal pressure of the bladder (6) becomes a predetermined pressure (P1), then close said valve,
open the first discharge valve (28) to discharge gas in the bladder (6),
close the first discharge valve (28) to stop the discharge of the gas when the internal pressure of the bladder (6) decreases to a predetermined pressure (P2),
open the first supply valve (20) to supply the steam into the bladder (6), thereby increasing the internal pressure of the bladder (6), and then close it after a predetermined time,
open the second supply valve (24) to supply a pressurized gas into the bladder (6) such that the internal pressure of the bladder (6) becomes a predetermined pressure (P3), then close said valve, open the second discharge valve (32) to discharge the gas in the bladder (6),
close the second discharge valve (32) to stop the discharge of the gas when the internal pressure of the bladder (6) decreases to a predetermined pressure (P4), and
open the second supply valve (24) to supply the pressurized gas into the bladder (6), thereby increasing the internal pressure of the bladder (6), and close said valve after a predetermined time.

7. The production apparatus (2) according to claim 6, further comprising a pipe through which a liquefied material of the steam is discharged, wherein
one pipe is used as both the pipe and the first discharge pipe (26).

8. The production apparatus (2) according to claim 6 or 7, further comprising a pipe through which the pressurized gas is collected, wherein
one pipe is used as both the pipe and the second discharge pipe (30).

## Patentansprüche

1. Verfahren zum Herstellen eines Luftreifens, wobei das Verfahren die Schritte umfasst:
(A) Einsetzen einer Rohabdeckung (R) in eine Form (4);
(B) Zuführen von Dampf in einen Heizbalg (6), der sich im Inneren der Rohabdeckung (R) befindet, so dass ein Innendruck des Heizbalgs (6) einen vorbestimmten Druck (P1) annimmt;
(C) Ableiten von Gas in dem Heizbalg (6);
(D) Stoppen des Gasableitens, wenn der Innendruck des Heizbalgs (6) auf einen vorbestimmten Druck (P2) abfällt;
(E) Erhöhen des Innendrucks des Heizbalgs (6) durch Zuführen des Dampfes in den Heizbalg (6);
(F) Zuführen eines unter Druck stehenden Gases in den Heizbalg (6), so dass der Innendruck des Heizbalgs (6) einen vorbestimmten Druck (P3) annimmt;
(G) Ableiten des Gases in dem Heizbalg (6);
(H) Stoppen des Gasableitens, wenn der Innendruck des Heizbalgs (6) auf einen vorbestimmten Druck (P4) abfällt; und
(I) Erhöhen des Innendrucks des Heizbalgs (6) durch Zuführen des unter Druck stehenden Gases in den Heizbalg (6).

2. Verfahren nach Anspruch 1, wobei die Zufuhr des Dampfes in den Heizbalg (6) im Schritt (C) gestoppt wird.

3. Verfahren nach Anspruch 1 oder 2, wobei die Zufuhr des Druckgases in den Heizbalg (6) im Schritt (G) gestoppt wird.

4. Verfahren nach einem der Ansprüche 1 bis 3, wobei in dem Schritt (C) das Gas in dem Heizbalg (6) durch eine Leitung abgeleitet wird, durch die ein verflüssigtes Material des Dampfes abgeleitet wird.

5. Verfahren nach einem der Ansprüche 1 bis 4, wobei in dem Schritt (G) das Gas in dem Heizbalg (6) durch eine Leitung abgeleitet wird, durch die das unter Druck stehende Gas gesammelt wird.

6. Produktionsvorrichtung (2) für einen Luftreifen, umfassend:
eine Form (4);
einen Heizbalg (6), der sich in der Form (4) befindet;
eine erste Zufuhrleitung (18), durch die Dampf in den Heizbalg (6) zugeführt wird;
ein erstes Zufuhrventil (20) zum Öffnen und Schließen der ersten Zufuhrleitung (18);
eine zweite Zufuhrleitung (22), durch die ein unter Druck stehendes Gas in den Heizbalg (6) zugeführt wird;
ein zweites Zufuhrventil (24) zum Öffnen und Schließen der zweiten Zufuhrleitung (22);
ein erste Ableitungsleitung (26) und eine zweite Ableitungsleitung (30),
durch die Gas in dem Heizbalg (6) abgeleitet werden kann;
ein erstes Ableitungsventil (28), das an der ersten Ableitungsleitung (26) montiert ist;
ein zweites Ableitungsventil (32), das an der zweiten Ableitungsleitung (30) montiert ist;
ein Druckmessgerät (12), das so konfiguriert ist, dass es einen Innendruck des Heizbalgs (6) misst; und
einen Controller (38), der in der Lage ist, das Öffnen und Schließen des ersten Ableitungsventils (28) und des zweiten Ableitungsventils (32) auf der Grundlage eines Messergebnisses des Druckmessgeräts (12) zu steuern, und der in der Lage ist, das erste Zufuhrventil (20) und das zweite Zufuhrventil (24) zu öffnen und zu schließen,
**dadurch gekennzeichnet, dass** der Controller (38) konfiguriert ist zum Öffnen des ersten Zufuhrventils (20), um Dampf in den Heizbalg (6) zuzuführen, so dass ein Innendruck des Heizbalgs (6) einen vorbestimmten Druck (P1) annimmt, dann Schließen des Ventils,
Öffnen des ersten Ableitungsventils (28), um das Gas in dem Heizbalg (6) abzuleiten,
Schließen des ersten Ableitungsventils (28), um das Ableiten des Gases zu stoppen, wenn der Innendruck des Heizbalgs (6) auf einen vorbestimmten Druck (P2) abnimmt,
Öffnen des ersten Zufuhrventils (20), um den Dampf in den Heizbalg (6) zuzuführen, wodurch der Innendruck des Heizbalgs (6) erhöht wird, und dann Schließen desselben nach einer vorbestimmten Zeit,
Öffnen des zweiten Zufuhrventils (24), um ein unter Druck stehendes Gas in den Heizbalg (6) zuzuführen, so dass der Innendruck des Heizbalg (6) einen vorbestimmten Druck (P3) annimmt, und dann Schließen des Ventils,
Öffnen des zweiten Ableitungsventils (32), um das Gas in dem Heizbalg (6) abzuleiten,
Schließen des zweiten Ableitungsventils (32), um das Ableiten des Gases zu stoppen, wenn der Innendruck des Heizbalgs (6) auf einen vorbestimmten Druck (P4) abnimmt, und
Öffnen des zweiten Versorgungsventils (24), um das unter Druck stehende Gas in den Heizbalg (6) zuzuführen, wodurch der Innendruck des Heizbalgs (6) erhöht wird, und dann Schließen des Ventils nach einer vorbestimmten Zeit.

7. Produktionsvorrichtung (2) nach Anspruch 6,
die ferner eine Leitung umfasst, durch die ein verflüssigtes Material des Dampfes abgeleitet wird, wobei eine Leitung sowohl als die Leitung als auch als die erste Ableitungsleitung (26) verwendet wird.

8. Produktionsvorrichtung (2) nach Anspruch 6 oder 7,
die ferner eine Leitung umfasst, durch die das unter Druck stehende Gas gesammelt wird, wobei die Leitung sowohl als die Leitung als auch als die zweite Ableitungsleitung (30) verwendet wird.

## Revendications

1. Procédé pour produire un bandage pneumatique, le procédé comprenant les étapes consistant à :
(A) mettre en place une couverture brute (R) dans un moule (4) ;
(B) alimenter de la vapeur jusque dans une poche (6) située à l'intérieur de la couverture brute (R), de sorte qu'une pression interne de la poche (6) devient une pression prédéterminée (P1) ;
(C) décharger un gaz dans la poche (6) ;
(D) arrêter la décharge du gaz quand la pression interne de la poche (6) diminue à une pression prédéterminée (P2) ;
(E) augmenter la pression interne de la poche (6) en alimentant la vapeur jusque dans la poche (6) ;
(F) alimenter un gaz pressurisé jusque dans la poche (6) de sorte que la pression interne de la poche (6) devient une pression prédéterminée (P3) ;
(G) décharger le gaz dans la poche (6) ;
(H) arrêter la décharge du gaz quand la pression interne de la poche (6) diminue à une pression prédéterminée (P4) ; et
(I) augmenter la pression interne de la poche (6) en alimentant le gaz pressurisé jusque dans la poche (6).

2. Procédé selon la revendication 1, dans lequel l'alimentation de la vapeur jusque dans la poche (6) est arrêtée dans l'étape (C).

3. Procédé selon la revendication 1 ou 2, dans lequel l'alimentation du gaz pressurisé jusque dans la poche (6) est arrêtée à l'étape (G).

4. Procédé selon l'une quelconque des revendications 1 à 3, dans lequel, dans l'étape (C), le gaz dans la poche (6) est déchargé via un tube à travers lequel un matériau liquéfié de la vapeur est déchargé.

5. Procédé selon l'une quelconque des revendications 1 à 4, dans lequel, dans l'étape (G), le gaz dans la poche (6) est déchargé via un tube à travers lequel le gaz pressurisé est collecté.

6. Appareil de production (2) pour un bandage pneumatique, comprenant :
un moule (4) ;
une poche (6) située dans le moule (4) ;
un premier tube d'alimentation (18) à travers lequel de la vapeur est alimentée jusque dans la poche (6) ;
une première vanne d'alimentation (20) destinée à ouvrir et à fermer le premier tube d'alimentation (18) ;
un second tube d'alimentation (22) à travers lequel un gaz pressurisé est alimenté jusque dans la poche (6) ;
une seconde vanne d'alimentation (24) destinée à ouvrir et à fermer le second tube d'alimentation (22) ;
un premier tube de décharge (26) et un second tube de décharge (30) à travers lesquels du gaz dans la poche (6) peut être déchargé ;
une première vanne de décharge (28) montée sur le premier tube de décharge (26) ;
une seconde vanne de décharge (32) montée sur le second tube de décharge (30) ;
une jauge de pression (12) configurée pour mesurer une pression interne de la poche (6) ; et
un contrôleur (38) capable de commander une ouverture et une fermeture de la première vanne de décharge (28) et de la seconde vanne de décharge (30) sur la base d'un résultat de mesurage de la jauge de pression (12), et capable d'ouvrir et de fermer la première vanne d'alimentation (20) et la seconde vanne d'alimentation (24),
**caractérisé en ce que** le contrôleur (38) est configuré pour ouvrir la première vanne d'alimentation (20) pour alimenter de la vapeur jusque dans la poche (6) de sorte qu'une pression interne de la poche (6) devient une pression prédéterminée (P1), puis fermer ladite vanne,
ouvrir la première vanne de décharge (28) pour décharger du gaz dans la poche (6),
fermer la première vanne de décharge (28) pour arrêter la décharge du gaz quand la pression interne de la poche (6) diminue à une pression prédéterminée (P2),
ouvrir la première vanne d'alimentation (20) pour alimenter la vapeur jusque dans la poche (6), augmentant ainsi la pression interne de la poche (6), et puis la fermer après une durée prédéterminée,
ouvrir la seconde vanne d'alimentation (24) pour alimenter un gaz pressurisé jusque dans la poche (6) de sorte que la pression interne de la poche (6) devient une pression prédéterminée (P3), puis fermer ladite vanne,
ouvrir la seconde vanne de décharge (32) pour décharger le gaz dans la poche (6),
fermer la seconde vanne de décharge (32) pour arrêter la décharge du gaz quand la pression interne de la poche (6) diminue à une pression prédéterminée (P4), et
ouvrir la seconde vanne d'alimentation (24) pour alimenter le gaz pressurisé jusque dans la poche (6), augmentant ainsi la pression interne de la poche (6), et fermer ladite vanne après une durée prédéterminée.

7. Appareil de production (2) selon la revendication 6, comprenant en outre un tube à travers lequel un matériau liquéfié de la vapeur est déchargé, dans lequel
un tube est utilisé à la fois comme tube et comme premier tube de décharge (26).

8. Appareil de production (2) selon la revendication 6 ou 7, comprenant en outre un tube à travers lequel le gaz pressurisé est collecté, dans lequel un tube est utilisé à la fois comme tube et comme second tube de décharge (30).
